# EUROPEAN PATENT APPLICATION

(11) **EP 4 375 585 A1**
(43) Date of publication of application: **29.05.2024**
(21) Application number: 21952430.3
(22) Date of filing: 06.08.2021
(51) Int. Cl.: F24F 11/64, G06F 30/27

(54) **DYNAMIC PREDICTION CONTROL METHOD, APPARATUS AND SYSTEM FOR PRECISION AIR CONDITIONER**

(71) Applicant: Siemens Schweiz AG, 8047 Zürich (CH)
(72) Inventor: BAI, Xin, Shandong 252000 (CN); ZHOU, Xiaozhou, Beijing 100102 (CN); SUN, Tianrui, Beijing 100191 (CN)
(74) Representative: Siemens Patent Attorneys
(86) International application number: PCT/CN2021/111276
(87) International publication number: WO 2023/010556

(57) **Abstract**

Provided in the present invention are a dynamic prediction control method, apparatus and system for a precision air conditioner. The method comprises the following steps: Sl, generating a three-dimensional simulation model on the basis of a simulation template and according to static information of the hardware configuration and layout in an application scene where a precision air conditioner is located; S2, executing simulation on the basis of a dynamic parameter of the precision air conditioner corresponding to the three-dimensional simulation model, and establishing a correspondence between the dynamic parameter and a simulation result by means of machine learning, so as to generate a proxy model; and S3, predicting a temperature distribution and change in the application scene on the basis of the proxy model and real-time dynamic data of the precision air conditioner. The dynamic prediction control mechanism for a precision air conditioner provided in the present invention fills the blank of dynamic monitoring and optimization systems between hardware and data center management software, for example, energy management and task scheduling, such that an operator can understand and control the operation of an precision air conditioner more clearly, so as to meet the dynamic thermal management requirement of a data center.

## Description

### Technical Field

The present invention relates to the field of precision air conditioners, and in particular relates to a dynamic prediction control method, apparatus and system for a precision air conditioner.

### Background Art

In a data center, management of heat and energy are crucial for reducing performance usage effectiveness (PUE) and for protecting smooth operation of IT devices. The IT devices comprise server racks, blade servers, etc. An HVAC system, especially a computer room air conditioner (CRAC) unit, is responsible for most energy loss besides IT devices. Due to reduced cooling requirements, an average temperature increase of 1 degree centigrade inside a data center can result in a 4% - 5% energy saving. Therefore, dynamically analyzing a heating power operating condition has much potential for improving energy performance of energy of a data center and other intelligent infrastructure, and can reduce operating costs.

Today, most solutions on the market come from a hardware end, for example, by means of upgrading a CRAG unit, redesigning a ventilation system, physical accessories of a server rack or using another medium to replace an air cooling system. From the perspective of software solutions, some data center management systems provide a work allocation function to adjust server load, so as to reduce thermal energy production and save on energy. However, these methods lack coordination with overall heat distribution, and merely depend on empirical calculations. Recently, a simulation with CFD software has been used to obtain kinetic energy thereof to provide details of thermal energy performance of a data center; however, the application thereof is mainly limited to the design stage. For example, before any actual change occurs, some companies have tried using CFD software 6SigmaDC, for testing and verifying data centers thereof, to act as a virtual test platform. Some companies, for their own software, have also provided data center infrastructure management (DCIM) development kits, which can bring extra capabilities for complex energy and heat management challenges. In this type of scenario, a dynamic prediction and optimization tool/system for heat and energy management can help provide a bridge between hardware and software solutions.

### Summary of the Invention

A first aspect of the present invention provides a dynamic prediction control method for a precision air conditioner, wherein the method comprises the following steps: S1, generating a three-dimensional simulation model, on the basis of a simulation template, according to static information of a hardware configuration and layout of an application scene where the precision air conditioner is located, wherein the three-dimensional simulation model and a static model of the hardware configuration and layout of the application scene correspond to each other; S2, running a simulation on the basis of a dynamic parameter of the precision air conditioner corresponding to the three-dimensional simulation model, and establishing a correspondence relationship between the dynamic parameter and a simulation result using machine learning, so as to generate a proxy model; and S3, predicting a temperature distribution and change of the application scene on the basis of the proxy model and real-time dynamic data of the precision air conditioner.

Furthermore, the dynamic prediction control method for a precision air conditioner further comprises the following step: iteratively optimizing a control parameter of at least one said precision air conditioner, on the basis of the three-dimensional simulation model and/or the proxy model, wherein the control parameters comprise number of air conditioners turned on, supply air temperature and flow rate.

Furthermore, the dynamic prediction control method for a precision air conditioner further comprises the following step: according to a load plan of hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

Furthermore, the dynamic prediction control method for the precision air conditioner further comprises the following step: comparing an actual value of a physical sensor of the hardware configuration of the application scene with a predicted value of the simulation model, and if a deviation between the actual value and the predicted value exceeds a second predetermined threshold value, then adjusting a static parameter, and on the basis of a change of the static parameter, generating a parameter model, and using a simulator of computational fluid dynamics to make a prediction.

Furthermore, the three-dimensional simulation model is based on computational fluid dynamics, and numerically simulates and calculates mass, energy and momentum transfer generated in a fluid flow process in three-dimensional space, and graphically presents calculation results of temperature, pressure and speed of fluid in the application scene space by means of a contour plot or line graph.

A second aspect of the present invention provides a dynamic prediction control system for a precision air conditioner, the system comprising: a processor; and a memory coupled to the processor, the memory having an instruction stored therein, and the instruction, when executed by the processor, causing the dynamic prediction control system for a precision air conditioner to execute an action, the action comprising: S1, according to static information of a hardware configuration and layout of an application scene where the precision air conditioner is located, generating a three-dimensional simulation model on the basis of a simulation template, wherein the three-dimensional simulation model and a static model of the hardware configuration and layout of the application scene correspond to each other; S2, running a simulation on the basis of a dynamic parameter of the precision air conditioner corresponding to the three-dimensional simulation model, and establishing a correspondence relationship between the dynamic parameter and a simulation result using machine learning, so as to generate a proxy model; and S3, predicting a temperature distribution and change of the application scene on the basis of the proxy model and real-time dynamic data of the precision air conditioner.

Furthermore, the action of the dynamic prediction control system for a precision air conditioner further comprises the following step: iteratively optimizing a control parameter of at least one said precision air conditioner, on the basis of the three-dimensional simulation model and/or the proxy model, wherein the control parameters comprise number of air conditioners turned on, supply air temperature and flow rate.

Furthermore, the action comprises: according to a load plan of hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

Furthermore, the action comprises: comparing an actual value of a physical sensor of the hardware configuration of the application scene with a predicted value of the simulation model, and if a deviation between the actual value and the predicted value exceeds a second predetermined threshold value, then adjusting a static parameter, and on the basis of a change of the static parameter, generating a parameter model, and using a simulator of computational fluid dynamics to make a prediction.

Furthermore, the three-dimensional simulation model is based on computational fluid dynamics, and numerically simulates and calculates mass, energy and momentum transfer generated in a fluid flow process in three-dimensional space, and graphically presents calculation results of temperature, pressure and speed of fluid in the application scene space by means of a contour plot or line graph.

A third aspect of the present invention provides a dynamic prediction control apparatus for a precision air conditioner, wherein the apparatus comprises: a generation apparatus, which, according to static information of a hardware configuration and layout of an application scene where the precision air conditioner is located, generates a three-dimensional simulation model on the basis of a simulation template, wherein the three-dimensional simulation model and a static model of the hardware configuration and layout of the application scene correspond to each other; a simulation apparatus, which runs a simulation on the basis of a dynamic parameter of the precision air conditioner corresponding to the three-dimensional simulation model, and establishes a correspondence relationship between the dynamic parameter and a simulation result using machine learning, so as to generate a proxy model; and a prediction apparatus, which predicts a temperature distribution and change of the application scene on the basis of the proxy model and real-time dynamic data of the precision air conditioner.

A fourth aspect of the present invention provides a computer program product, the computer program product being tangibly stored on a computer readable medium and comprising a computer executable instruction, and the computer executable instruction, when executed, causing at least one processor to execute the method according to the first aspect of the present invention.

A fifth aspect of the present invention provides a computer readable medium, a computer executable instruction being stored thereon, and the computer executable instruction, when executed, causing at least one processor to execute any one of the methods according to the first aspect of the present invention.

A dynamic prediction control mechanism for a precision air conditioner provided by the present invention fills a gap in dynamic monitoring and optimization systems between hardware and data center management software, for example, energy management and task scheduling, so that an operator may more clearly understand and control heat performance of precision air conditioner operation. The optimized features obtained on the basis of a physical simulator help to reduce unnecessary energy loss at the power supply side, and do not affect daily operating conditions of IT devices nor require an excessive number of physical sensors. In addition, an irregularity detection module can provide an early warning of a potential system fault, to avoid unnecessary downtime.

### Description of the Accompanying Drawings

Fig. 1 is a structural schematic diagram of a dynamic prediction control system for a precision air conditioner according to a particular embodiment of the present invention;
Fig. 2 is a schematic diagram of principles of a simulator of a dynamic prediction control system for a precision air conditioner according to a particular embodiment of the present invention;
Fig. 3 shows effects of different data center cabinet supply-air temperatures on cabinet outflow air temperature in different load scenarios of a simulator of a dynamic prediction control system for a precision air conditioner according to a particular embodiment of the present invention.

### Detailed Description of the Invention

Particular embodiments of the present invention are explained below with reference to the accompanying drawings.

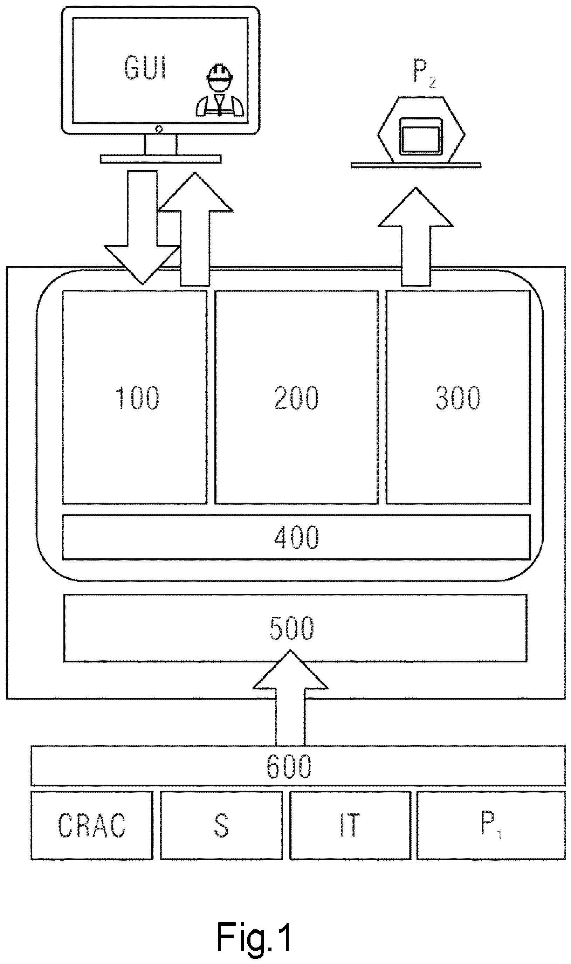

The present invention provides a dynamic prediction control mechanism for a precision air conditioner; the present invention, on the basis of a digital twin, provides a dynamic prediction and optimization system for thermal management of a precision air conditioner application scene, which uses several data sources to model heating power performance of a hardware configuration and layout of the application scene. As shown in Fig. 1, a dynamic prediction control system for a precision air conditioner CRAG comprises a monitoring prediction apparatus 100, an optimization apparatus 200, an abnormality detection apparatus 300, a simulator 400 and a database 500. The simulator 400 can be called by any one of the monitoring prediction apparatus 100, optimization apparatus 200 and abnormality detection apparatus 300, and returns prediction performance data for further analysis. A southbound interface 600 is connected to field data and another external system, and moreover, simultaneously provides a current operation state and recommendation, so as to perform adjustment or execute an external application. Demonstratively, the field data comprises a sensor from the precision air conditioner application scene and DDC control, said other external system comprises, for example, an application scene management system, and another external application comprises a task scheduling program. In addition, the dynamic prediction control system for a precision air conditioner further comprises an external interface P₂, a sensor S, a data center management tool IT and a software interface P₁.

The database 500 saves required system configurations, operating states and parameters of the monitoring prediction apparatus 100, optimization apparatus 200 and abnormality detection apparatus 300, and predetermined predictions or outputs of special analysis. The system configurations comprise data center server and ventilation system layout parameters, IT device IDs and power capacities, precision air conditioner unit IDs and power capacities, energy billing, etc. The operating states comprise sensor reading, load percentage of a single server, main positioning of a precision air conditioner unit, etc. The output data comprises virtual temperature distribution and predicted energy requirements, etc.

The monitoring prediction apparatus 100 executes data extraction from the database 500 at specific time intervals, for example 15 to 30 minutes. Every two groups of data should be considered to make a prediction, and dynamic data describes collected information of a precision air conditioner target application scene, that is dynamic data of operating states. The simulator 400 stores collected data in an XML file format. A simulation engine uses any CFD model; for example, a Flotherm model or proxy model (surrogate model) considers current operation state and temperature information predicted temperature distribution of application scene key positions, and uses a virtual sensor for display, to facilitate a runner to determine potential hotspots and assess an existing operating arrangement. A selection of a simulation policy is based on accuracy and availability of an empirical proxy model. When connected to a task scheduling system, the above-mentioned module can also predict future events, and if the current operating arrangement cannot satisfy expected temperature requirements, an early warning is issued for an operation of a demand end.

In addition, a graphical user interface (GUI) is a user interface of a user and dynamic prediction control for a precision air conditioner provided by the present invention.

The optimization apparatus 200 provides recommendations for operation or external applications from a supply end, for example defines optimized set points. Taking into account a minimization target and constraint of energy costs/losses, such as maximum server entrance data center server temperature, the above-mentioned module calls the optimizer to generate a series of operation parameters within a specific range, and the simulator tests and makes a corresponding prediction, the optimizer uses these predictions to further refine and recommend an optimization combination. For example, if multiple precision air conditioner units are provided in an application scene, then the optimization module 200 can help to decide an optimized on/off schedule while keeping the temperature of a hardware configuration and layout of an application scene in a safe range. In another scenario, taking into account a specific temperature requirement or actual task load, the optimizer recommends one extra or fewer set point. If the subsequent next task is clear, such as the next task from a task scheduler system, the optimizer helps to search for an optimized task path and schedule, and at the same time, costs and time limits are taken into account.

The abnormality detection apparatus 300 compares saved data of a physical sensor in the database 500 and read data of a virtual sensor. The same deviation indicates a fault in a sensor or IT device, and, in this type of scenario, attention should be paid to operation and maintenance, in order to ensure safety and smooth operation of the hardware configuration and layout of the application scene.

A first aspect of the present invention provides a dynamic prediction control method for a precision air conditioner, wherein the method comprises the following steps:
Firstly, step S1 is executed: generating a three-dimensional simulation model, on the basis of a simulation template, according to static information of a hardware configuration and layout of an application scene where the precision air conditioner is located, wherein the three-dimensional simulation model and a static model of the hardware configuration and layout of the application scene correspond to each other.

In the present embodiment, it is supposed that an application scene of the precision air conditioner is a data center, a target data center has multiple cabinets, multiple servers are placed on each cabinet, and the data center is further provided with an individual data center management system (DCIM). To guarantee the regular operation of the data center servers, the data center is equipped with three precision air conditioners (CRAC), which cool the space by supplying air through a perforated floor, the supply air temperature is 15 - 22 degrees, and if relying on feedback of completely physical temperature sensors to execute control of a precision air conditioner, then problems exist such as timeliness and precision of computer room temperature control being poorer, and a power usage efficiency (PUE) and air conditioner energy consumption being too high. Therefore, according to static data in the database 500, combined with a software preset parametrized simulation template, a three-dimensional simulation model of the data center is rapidly generated, and said simulation model must mutually correspond with a physical model; for example, numbers of cabinets and air conditioners of the data center and the above-mentioned hardware positions should all correspond to those of the three-dimensional simulation model on a one-to-one basis.

Preferably, the three-dimensional simulation model is a three-dimensional simulation model based on computational fluid dynamics, and using a computer, numerically simulates and calculates mass, energy and momentum transfer generated in a fluid flow process in three-dimensional space, and graphically presents calculation results such as temperature, pressure and speed by means of a contour plot or line graph. The graphical presentation is optionally in the monitoring prediction apparatus 100.

Specifically, the three-dimensional simulation model is a geometric model, and in the present embodiment, comprises a data center computer room model and layout, cabinet model and layout, precision air conditioner device model, etc., and the above-mentioned models and layouts may be imported from thirdparty software. Simulation and calculation of the three-dimensional simulation model requires introducing boundary conditions, the boundary conditions comprising environment temperature, surface material heat transfer coefficient, server heating power, inflow air temperature and speed, etc., to correspond to the operating condition to be predicted or simulated. The solver may be generic software, and has mature support in the prior art, and for the sake of simplicity and clarity, is not described here superfluously.

The static information is system configuration information; for example, in the present embodiment, the static information comprises information such as the number, positions and orientations of cabinets of a data center, and each server serial number and corresponding power curve, ventilation layout, perforated floor layout and degree of opening, air conditioner device serial number, power curve, maximum refrigeration amount, etc.

Next, step S2 is executed: the simulator 400 running a simulation on the basis of a dynamic parameter of the precision air conditioner corresponding to the three-dimensional simulation model, and establishing a correspondence relationship between the dynamic parameter and a simulation result using machine learning, so as to generate a proxy model.

Subsequently, step S3 is executed: predicting a temperature distribution and change of the application scene on the basis of the proxy model and real-time dynamic data of the precision air conditioner.

Specifically, on the basis of an established three-dimensional simulation model, operating conditions of different precision air conditioners corresponding to different dynamic parameters and an application scene thereof are introduced to run simulations multiple times, simulation results comprising temperature, pressure, speed, etc. are stored in a database, and then machine learning is used to establish a correspondence relationship between the dynamic parameters and simulation results, to generate a proxy model (surrogate model). The simulation results are simply values of a virtual sensor. The proxy model is based on a search table or correspondence relationship.

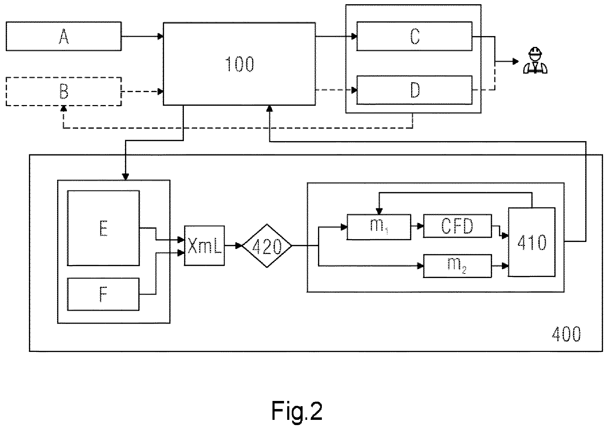

Specifically, as shown in Fig. 2, data input to the monitoring prediction apparatus 100 comprises operating state A and task progress B collected periodically, wherein operating state A and task progress B are both dynamic data. Dynamic data and real-time data output by the monitoring prediction apparatus 100 are provided to the simulator 400. Specifically, in the present embodiment, dynamic parameters of the simulator 400 comprise application scene dynamic parameters E and precision air conditioner dynamic parameters F, wherein the scene dynamic parameters E comprise space temperature, air conditioner position, space layout, and performance of thermal insulation material such as heat transfer coefficient. In the present embodiment, space layout is "seats" of a data center, air conditioner positions, number and positions of ventilation systems, etc. The precision air conditioner dynamic parameters F comprise key set parameters and air flow of an air conditioner, physical sensor readings such as temperature and humidity, and emitted heat and load of hardware. In the present embodiment, a temperature sensor and humidity sensor are demonstratively placed on a cabinet of a data center, and the emitted heat and load of hardware refers to emitted heat and load of servers of the data center.

The simulator 400 stores collected said data in an XML file format, and then runs a simulation on the basis of a simulation policy selected by a selector 420.

Empirical models or high-fidelity CFD tools are both capable of being used as simulation engines to adapt to actual operation requirements or different accuracies and speeds of a front-end application, for example being Flotherm. CFD tools are simulation software for computational fluid dynamics, and input the above-mentioned parameters, as a parameter model M1, into a three-dimensional model, and the output is a three-dimensional temperature distribution spatial flow field of space. The spatial flow field is velocity of airflow, and spatial streamlines are flow paths of air. Next, a calculator 410 performs a calculation on the basis of the three-dimensional temperature distribution spatial flow field output by the CFD tool and a proxy model M2, and outputs prediction information to the monitoring prediction apparatus 100. Next, the monitoring prediction apparatus 100 sends a reading C of a virtual sensor and warning information D to a client.

The proxy model M2 is a rapid response model returned according to a high-precision simulation model, for example being modeled on the basis of fluid dynamics. After the simulation model has a certain amount of data, a rapid proxy model responds in a timely manner to real-time changes. The parameter model M1 performs rapid modeling according to the above-mentioned parameters on the basis of a simulation template.

Furthermore, as shown in Fig. 1, the dynamic prediction control method for a precision air conditioner further comprises the following step: the optimization apparatus 200 iteratively optimizing a control parameter of at least one said precision air conditioner, on the basis of the three-dimensional simulation model and/or the proxy model, wherein the control parameters comprise number of air conditioners turned on, supply air temperature and flow rate. According to a preferred embodiment of the present invention, key control points are adjusted according to prediction results, for example supply air temperature, air conditioner inlet/outlet, air conditioner on/off, etc., and then, according to a comparison of detection and prediction, if a predicted value and actual value deviate then a warning is given that predicted temperature is too high, indicating that there is an excessively high temperature within a specific time and suggesting an operation. An optimization module 100 may first execute a reading and configuration of a precision air conditioner, a user target and restriction, for example, in order to ensure maximum power of air conditioner devices in a temperature range of data center cabinets and maximum flow rate of air discharge devices, then makes a prediction according to a future data center load plan, and then performs simulation verification by means of adjustable parameters, so as to determine whether optimization requirements have been met, and further adjusts a precision air conditioner energy consumption control policy, etc. For example, in an actual application, 90% load and 50% emitted heat, for example, of a cabinet are not the same.

Furthermore, the dynamic prediction control method for the precision air conditioner further comprises the following steps: according to a load plan of hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

Furthermore, as shown in Fig. 2, the selector 420 selects different simulation policies, and when the proxy model is stable, then on the basis of the proxy model and real-time dynamic data of the precision air conditioner, a temperature distribution and change of the application scene are predicted. If the proxy model is not stable, then an actual value of a physical sensor of a hardware configuration of the application scene is compared with a predicted value of the simulation model, and if a deviation between the actual value and the predicted value exceeds a second predetermined threshold value, then the selector 420 selects a different simulation policy, a static parameter is adjusted, and on the basis of a change of the static parameter, a parameter model is generated, and a prediction is made using a simulator of computational fluid dynamics.

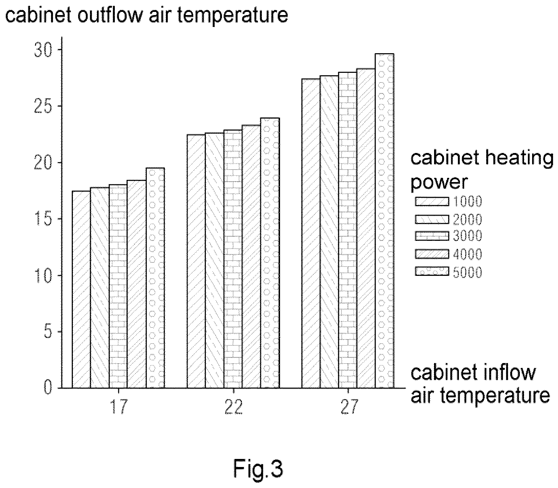

As shown in Fig. 3, horizontal coordinates are cabinet inflow air temperature of a data center and vertical coordinates are cabinet outflow air temperature of the data center, and different bar charts correspond to cabinet heating powers of different data centers. Fig. 3 illustrates the effect of different channel supply air temperatures on cabinet outflow air temperature in different load scenarios, wherein heating powers of cabinets correspond to different loads, and wherein heating powers of cabinets may have a positive correspondence relationship with loads, that is, the larger the load, the larger the heating power of the cabinet. Cabinet inflow air temperature and cabinet supply air temperature of a data center also have a positive correlation relationship, that is, the higher the cabinet inflow air temperature, the higher the cabinet supply air temperature. Demonstratively, cabinet heating powers corresponding to the different bar charts are respectively 1000 W, 2000 W, 3000 W, 4000 W and 5000 W. A maximum range for cabinet inflow air temperature that can be set, for a certain load, in order to control cabinet outflow air temperature, can be roughly obtained from Fig. 3. As shown in Fig. 3, for cabinet inflow air temperatures of approximately 17 degrees, 22 degrees and 27 degrees, a cabinet outflow air temperature range also increases. For example, comparing heating powers of 1000 W, different cabinet inflow air temperatures of 17 degrees, 22 degrees and 27 degrees correspond to different outflow air temperatures of about 17.5 degrees, 22.5 degrees and 27 degrees, respectively. Therefore, if a cabinet outflow air temperature threshold value is provided, an approximate range which an approximate cabinet inflow air temperature may satisfy may be seen, and a corresponding maximum cabinet inflow air temperature is just a recommended channel supply air temperature.

A second aspect of the present invention provides a dynamic prediction control system for a precision air conditioner, the system comprising: a processor; and a memory coupled to the processor, the memory having an instruction stored therein, and the instruction, when executed by the processor, causing the dynamic prediction control system for a precision air conditioner to execute an action, the action comprising: S1, according to static information of a hardware configuration and layout of an application scene where the precision air conditioner is located, generating a three-dimensional simulation model on the basis of a simulation template, wherein the three-dimensional simulation model and a static model of the hardware configuration and layout of the application scene correspond to each other; S2, running a simulation on the basis of a dynamic parameter of the precision air conditioner corresponding to the three-dimensional simulation model, and establishing a correspondence relationship between the dynamic parameter and a simulation result using machine learning, so as to generate a proxy model; and S3, predicting a temperature distribution and change of the application scene on the basis of the proxy model and real-time dynamic data of the precision air conditioner.

Furthermore, the dynamic prediction control system for the precision air conditioner further comprises the following step: iteratively optimizing a control parameter of at least one said precision air conditioner, on the basis of the three-dimensional simulation model and/or the proxy model, wherein the control parameters comprise number of air conditioners turned on, supply air temperature and flow rate.

Furthermore, the action comprises: according to a load plan of the hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

Furthermore, the action comprises: comparing an actual value of a physical sensor of the hardware configuration of the application scene with a predicted value of the simulation model, and if a deviation between the actual value and the predicted value exceeds a second predetermined threshold value, then adjusting a static parameter, and on the basis of a change of the static parameter, generating a parameter model, and using a simulator of computational fluid dynamics to make a prediction.

Furthermore, the three-dimensional simulation model is based on computational fluid dynamics, and numerically simulates and calculates mass, energy and momentum transfer generated in a fluid flow process in three-dimensional space, and graphically presents calculation results of temperature, pressure and speed of fluid in the application scene space, by means of a contour plot or line graph.

A third aspect of the present invention provides a dynamic prediction control apparatus for a precision air conditioner, wherein the apparatus comprises: a generation apparatus, which generates a three-dimensional simulation model, on the basis of a simulation template, according to static information of a hardware configuration and layout of an application scene where the precision air conditioner is located, wherein the three-dimensional simulation model and a static model of the hardware configuration and layout of the application scene correspond to each other; a simulation apparatus, which runs a simulation on the basis of a dynamic parameter of the precision air conditioner corresponding to the three-dimensional simulation model, and establishes a correspondence relationship between the dynamic parameter and a simulation result using machine learning, so as to generate a proxy model; and a prediction apparatus, which predicts a temperature distribution and change of the application scene on the basis of the proxy model and real-time dynamic data of the precision air conditioner.

A fourth aspect of the present invention provides a computer program product, the computer program product being tangibly stored on a computer readable medium and comprising a computer executable instruction, and the computer executable instruction, when executed, causing at least one processor to execute the method according to the first aspect of the present invention.

A fifth aspect of the present invention provides a computer readable medium, a computer executable instruction being stored thereon, and the computer readable instruction, when executed, causing at least one processor to execute any one of the methods according to the first aspect of the present invention.

The dynamic prediction control mechanism for a precision air conditioner provided by the present invention fills a gap in dynamic monitoring and optimization systems between hardware and data center management software, for example, energy management and task scheduling, so that an operator may more clearly understand and control precision air conditioner operation to satisfy dynamic thermal management requirements of a data center. The optimized features obtained on the basis of a physical simulator help to reduce unnecessary energy loss at the power supply side, and do not affect daily operating conditions of IT devices nor require an excessive number of physical sensors. In addition, an irregularity detection module can provide an early warning of a potential system fault, to avoid unnecessary downtime.

Although the content of the present invention has already been presented in detail by means of the preferred embodiments above, it should be recognized that the above description should not be regarded as a restriction of the present invention. Various amendments and substitutions for the present invention will be obvious to those skilled in the art after perusal of the content above. Thus, the scope of protection of the present invention shall be defined by the appended claims. In addition, no reference labels in the claims should be regarded as restricting the claims concerned; the word "comprise" does not exclude another apparatus or step not set out in claim or the description; and terms such as "first" and "second" are only used to indicate designations, not any specific order.

## Claims

1. A dynamic prediction control method for a precision air conditioner, wherein the method comprises the following steps:
51, generating a three-dimensional simulation model, on the basis of a simulation template, according to static information of a hardware configuration and layout of an application scene where the precision air conditioner is located, wherein the three-dimensional simulation model and a static model of the hardware configuration and layout of the application scene correspond to each other;
S2, running a simulation on the basis of a dynamic parameter of the precision air conditioner corresponding to the three-dimensional simulation model, and establishing a correspondence relationship between the dynamic parameter and a simulation result using machine learning, so as to generate a proxy model; and
S3, predicting a temperature distribution and change of the application scene on the basis of the proxy model and real-time dynamic data of the precision air conditioner.

2. The dynamic prediction control method for a precision air conditioner as claimed in claim 1, **characterized in that** the dynamic prediction control method for a precision air conditioner further comprises the following step:
iteratively optimizing a control parameter of at least one said precision air conditioner, on the basis of the three-dimensional simulation model and/or the proxy model, wherein the control parameters comprise number of air conditioners turned on, supply air temperature and flow rate.

3. The dynamic prediction control method for a precision air conditioner as claimed in claim 1, **characterized in that** the dynamic prediction control method for a precision air conditioner further comprises the following steps:
according to a load plan of hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

4. The dynamic prediction control method for a precision air conditioner as claimed in claim 1, **characterized in that** the dynamic prediction control method for a precision air conditioner further comprises the following steps:
comparing an actual value of a physical sensor of the hardware configuration of the application scene with a predicted value of the simulation model, and if a deviation between the actual value and the predicted value exceeds a second predetermined threshold value, then adjusting a static parameter, and on the basis of a change of the static parameter, generating a parameter model, and using a simulator of computational fluid dynamics to make a prediction.

5. The dynamic prediction control method for a precision air conditioner as claimed in claim 1, **characterized in that** the three-dimensional simulation model is based on computational fluid dynamics, and numerically simulates and calculates mass, energy and momentum transfer generated in a fluid flow process in three-dimensional space, and graphically presents calculation results of temperature, pressure and speed of fluid in the application scene space by means of a contour plot or line graph.

6. A dynamic prediction control system for a precision air conditioner, the system comprising:
a processor; and
a memory coupled to the processor, the memory having an instruction stored therein, and the instruction, when executed by the processor, causing the dynamic prediction control system for a precision air conditioner to execute an action, the action comprising:
S1, according to static information of a hardware configuration and layout of an application scene where the precision air conditioner is located, generating a three-dimensional simulation model on the basis of a simulation template, wherein the three-dimensional simulation model and a static model of the hardware configuration and layout of the application scene correspond to each other;
S2, running a simulation on the basis of a dynamic parameter of the precision air conditioner corresponding to the three-dimensional simulation model, and establishing a correspondence relationship between the dynamic parameter and a simulation result using machine learning, so as to generate a proxy model; and
S3, predicting a temperature distribution and change of the application scene on the basis of the proxy model and real-time dynamic data of the precision air conditioner.

7. The dynamic prediction control system for a precision air conditioner as claimed in claim 1, **characterized in that** the action of the dynamic prediction control system for a precision air conditioner further comprises the following step:
iteratively optimizing a control parameter of at least one said precision air conditioner, on the basis of the three-dimensional simulation model and/or the proxy model, wherein the control parameters comprise number of air conditioners turned on, supply air temperature and flow rate.

8. The dynamic prediction control system for a precision air conditioner as claimed in claim 1, **characterized in that** the action comprises, according to a load plan of hardware configuration of the application scene and a power curve thereof, comparing a space temperature requirement of said application scene and a first predetermined threshold value, and if it is judged that refrigeration of the precision air conditioner is insufficient or the refrigeration is excessive, then adjusting an operating parameter of the precision air conditioner or adjusting the load plan of the application scene.

9. The dynamic prediction control system for a precision air conditioner as claimed in claim 1, **characterized in that** the action comprises:
comparing an actual value of a physical sensor of the hardware configuration of the application scene with a predicted value of the simulation model, and if a deviation between the actual value and the predicted value exceeds a second predetermined threshold value, then adjusting a static parameter, and on the basis of a change of the static parameter, generating a parameter model, and using a simulator of computational fluid dynamics to make a prediction.

10. The dynamic prediction control system for a precision air conditioner as claimed in claim 1, **characterized in that** the three-dimensional simulation model is based on computational fluid dynamics, and numerically simulates and calculates mass, energy and momentum transfer generated in a fluid flow process in three-dimensional space, and graphically presents calculation results of temperature, pressure and speed of fluid in the application scene space by means of a contour plot or line graph.

11. A dynamic prediction control apparatus for a precision air conditioner, wherein the apparatus comprises:
a generation apparatus, which, according to static information of a hardware configuration and layout of an application scene where the precision air conditioner is located, generates a three-dimensional simulation model on the basis of a simulation template, wherein the three-dimensional simulation model and a static model of the hardware configuration and layout of the application scene correspond to each other;
a simulation apparatus, which runs a simulation on the basis of a dynamic parameter of the precision air conditioner corresponding to the three-dimensional simulation model, and establishes a correspondence relationship between the dynamic parameter and a simulation result using machine learning, so as to generate a proxy model; and
a prediction apparatus, which predicts a temperature distribution and change of the application scene on the basis of the proxy model and real-time dynamic data of the precision air conditioner.

12. A computer program product, the computer program product being tangibly stored on a computer readable medium and comprising a computer executable instruction, and the computer executable instruction, when executed, causing at least one processor to execute the method as claimed in any one of claims 1 to 5.

13. A computer readable medium, a computer executable instruction being stored thereon, and the computer executable instruction, when executed, causing at least one processor to execute the method as claimed in any one of claims 1 to 5.
